# EUROPEAN PATENT APPLICATION

(11) **EP 4 752 053 A1**
(43) Date of publication of application: **03.06.2026**
(21) Application number: 25218786.9
(22) Date of filing: 26.11.2025
(51) Int. Cl.: B64C 25/14, B64C 25/20

(54) **AIRCRAFT LANDING GEAR ASSEMBLY**

(30) Priority: 28.11.2024 GB 202417504
(71) Applicant: Airbus Operations Limited, Bristol BS34 7PA (GB)
(72) Inventor: HANCOCK, Nicholas, Bristol, BS34 7PA (GB); BISHOP, Benjamin, Bristol, BS34 7PA (GB)
(74) Representative: Mathys & Squire

(57) **Abstract**

A landing gear assembly for an aircraft, the landing gear assembly comprising: a forward brace having a first end for attachment to an airframe of the aircraft, and a second end; an aft brace having a first end for attachment to the airframe of the aircraft, and a second end, wherein the second end of the aft brace is coupled to the second end of the forward brace; an actuator piston having a first end and a second end, wherein the first end of the actuator piston is pivotally attachable to the airframe of the aircraft; a bellcrank linkage having a first end, a second end, and a pivot point between the first end and the second end, such that a first portion of the bellcrank linkage extends from the first end to the pivot point, and a second portion of the bellcrank linkage extends from the pivot point to the second end, wherein the pivot point of the bellcrank linkage is pivotally attachable to the airframe of the aircraft, and wherein the first end of the bellcrank linkage is pivotally coupled to the second end of the actuator piston; a primary strut having a first end and a second end, wherein the first end of the primary strut is pivotally coupled to the second end of the forward brace and the second end of the aft brace, and wherein one or more wheels of the aircraft are mounted at the second end of the primary strut; and a secondary strut (e.g. a shock absorber) having a first end and a second end, wherein the first end of the secondary strut is pivotally coupled to the second end of the bellcrank linkage, and wherein the second end of the secondary strut is pivotally coupled to a pivot point near to the second end of the primary strut; wherein the landing gear assembly is configured to adopt a deployed configuration when the actuator piston is in an extended configuration, and wherein the landing gear assembly is configured to adopt a retracted configuration when the actuator piston is in a retracted configuration. Also provided is an aircraft (such as a blended wing body aircraft) having such a landing gear assembly.

## Description

### FIELD OF THE INVENTION

This invention relates to a landing gear assembly for an aircraft. The invention is particularly suitable, but by no means limited, for use with a blended wing body (BWB) aircraft.

### BACKGROUND TO THE INVENTION

The landing gear of a commercial passenger aircraft typically includes a main landing gear assembly beneath each wing of the aircraft, and/or beneath the fuselage of the aircraft. The landing gear also typically includes a smaller landing gear assembly, beneath or near to the aircraft's nose (also known as the "nose gear"). Usually, each landing gear assembly is retractable into a respective landing gear bay (or simply "gear bay") within the wings or fuselage of the aircraft during flight, in order to reduce drag, and is extendable from the gear bay, into a deployed configuration, for taxiing, take-off and landing operations, or for when the aircraft is parked.

In certain passenger aircraft, the main landing gear assemblies and/or the nose gear may be configured to retract aftwards into a respective gear bay, and the present work particularly relates to such aftwardly-retractable landing gear assemblies.

Blended wing body (BWB) aircraft have wing and body structures that are smoothly blended together, thereby reducing drag compared to aircraft having a conventional wing-body junction. The body of a BWB aircraft may also be shaped to provide lift (as well as providing space for passengers and/or cargo), thereby enabling the size and drag of the wings to be reduced.

With passenger aircraft in general, and BWB aircraft in particular, the space available for each gear bay is limited. It is desirable for each gear bay to be as compact as possible, to maximise the space available in the fuselage, wings or body of the aircraft for the carriage of passengers, cargo or fuel. This is especially (but not exclusively) an issue in BWB aircraft, as a consequence of the tapered profile of the aircraft's body and wings. In particular, the space available for the main landing gear bay of a BWB aircraft may be especially limited due to the tapering of the fuselage at the aft section of the aircraft, where the main landing gear is typically located. There is therefore a particular desire for the main landing gear bay of a BWB aircraft to be as compact as possible.

There is also a desire for the opening of a gear bay in an aircraft wing or body structure (through which opening the respective landing gear passes when transitioning from a retracted to deployed configuration, or vice versa), to be as short as possible, to maintain the mechanical properties and structural integrity of the aircraft wing or body structure in which the opening is formed.

In view of the above, there is a desire for landing gear assemblies (particularly, but not exclusively, the main landing gear assembly of a BWB aircraft) to be retractable into a compact configuration, to enable the respective gear bay to be as compact as possible, and to enable the gear bay opening in the wing or body structure of the aircraft to be as short as possible.

### SUMMARY OF THE INVENTION

Aspects and embodiments of the present invention are set out in the appended claims.

According to a first aspect of the present invention there is provided a landing gear assembly for an aircraft, the landing gear assembly comprising: a forward brace having a first end for attachment to (i.e. interfacing with) an airframe of the aircraft, and a second end; an aft brace having a first end for attachment to (i.e. interfacing with) the airframe of the aircraft, and a second end, wherein the second end of the aft brace is coupled to the second end of the forward brace; an actuator piston having a first end and a second end, wherein the first end of the actuator piston is pivotally attachable to the airframe of the aircraft; a bellcrank linkage having a first end, a second end, and a pivot point between the first end and the second end, such that a first portion of the bellcrank linkage extends from the first end to the pivot point, and a second portion of the bellcrank linkage extends from the pivot point to the second end, wherein the pivot point of the bellcrank linkage is pivotally attachable to the airframe of the aircraft, and wherein the first end of the bellcrank linkage is pivotally coupled to the second end of the actuator piston; a primary strut having a first end and a second end, wherein the first end of the primary strut is pivotally coupled to the second end of the forward brace and the second end of the aft brace, and wherein one or more wheels of the aircraft are mounted at the second end of the primary strut; and a secondary strut (e.g. a shock absorber) having a first end and a second end, wherein the first end of the secondary strut is pivotally coupled to the second end of the bellcrank linkage, and wherein the second end of the secondary strut is pivotally coupled to a pivot point near to the second end of the primary strut; wherein the landing gear assembly is configured to adopt a deployed configuration when the actuator piston is in an extended configuration, and wherein the landing gear assembly is configured to adopt a retracted configuration when the actuator piston is in a retracted configuration.

Such a configuration enables the landing gear assembly to be retractable into a short, compact configuration, to enable the respective gear bay to be as compact as possible, and to enable the gear bay opening in the wing or body structure of the aircraft to be as short as possible.

The aircraft may be a commercial passenger aircraft, for example an aircraft capable of transporting more than 50 passengers, for example more than 100 passengers. For the purposes of this application the term "commercial passenger aircraft" is also taken to include aircraft of the same type configured for cargo transport.

Optionally the first end of the primary strut is pivotally mounted about a common axis with the second end of the forward brace and the second end of the aft brace.

Optionally the pivot point of the bellcrank linkage is between the first end of the forward brace and the first end of the aft brace.

Optionally the second portion of the bellcrank linkage is at an acute angle relative to the first portion of the bellcrank linkage. For example, the acute angle may be approximately 70°.

Optionally the first portion of the bellcrank linkage is longer than the second portion of the bellcrank linkage. For example, the first portion of the bellcrank linkage may be approximately 1.3 times the length of the second portion of the bellcrank linkage.

Optionally the forward brace comprises a first forward bracing strut and a second forward bracing strut, each having a first end and a second end, wherein the first end of the first forward bracing strut and the first end of the second forward bracing strut form the first end of the forward brace, and wherein the second end of the first forward bracing strut and the second end of the second forward bracing strut join to form the second end of the forward brace.

Optionally the aft brace comprises a first aft bracing strut and a second aft bracing strut, each having a first end and a second end, wherein the first end of the first aft bracing strut and the first end of the second aft bracing strut form the first end of the aft brace, and wherein the second end of the first aft bracing strut and the second end of the second aft bracing strut form the second end of the aft brace.

Optionally the aft brace further comprises a cross member connecting the first aft bracing strut to the second aft bracing strut. The cross member may be closer to the first end of the aft brace than to the second end of the aft brace. The secondary strut may pass between the cross member and the second end of the aft brace.

Preferably the secondary strut comprises a shock absorber.

Optionally the shock absorber is configured to adopt an extended configuration in the event it loses oil or pressure.

Optionally the second end of the secondary strut is pivotally coupled to the pivot point near to the second end of the primary strut by means of a fuse pin.

Optionally, when transitioning from the deployed configuration to the retracted configuration, or vice versa, the first end of the bellcrank linkage is configured to rotate about the pivot point of the bellcrank linkage in an over-centred manner.

The landing gear assembly may be a main landing gear assembly. Alternatively, it may be a nose gear, for example.

According to a second aspect of the invention there is provided an aircraft comprising: the landing gear assembly according to the first aspect; and a landing gear bay; wherein the landing gear assembly is retractable into the landing gear bay when transitioning from the deployed configuration to the retracted configuration.

The aircraft may be a blended wing body (BWB) aircraft. Alternatively, however, it may be another type of aircraft. The landing gear bay may be behind a passenger area of the aircraft.

### BRIEF DESCRIPTION OF THE DRAWINGS

Embodiments of the invention will now be described, by way of example only, and with reference to the drawings in which:
Figure 1 is a schematic side view of a BWB aircraft;
Figure 2 is a perspective view of an example of a landing gear assembly in a deployed configuration;
Figure 3 is a side view of the landing gear assembly of Figure 2 in the deployed configuration, and also depicting part of the underside of the wing or body of the aircraft through which the landing gear assembly extends, and internal walls of the gear bay;
Figure 4 is a perspective view of the landing gear assembly of Figure 2 in a retracted configuration;
Figure 5 is a side view of the landing gear assembly of Figure 2 in the retracted configuration; and
Figures 6a to 6d are side views and Figures 7a to 7d are corresponding perspective views of the landing gear assembly of Figure 2 transitioning from the deployed configuration to the retracted configuration.

In the figures, like elements are indicated by like reference numerals throughout.

### DETAILED DESCRIPTION OF PREFERRED EMBODIMENTS

The present embodiments represent the best ways known to the Applicant of putting the invention into practice. However, they are not the only ways in which this can be achieved.

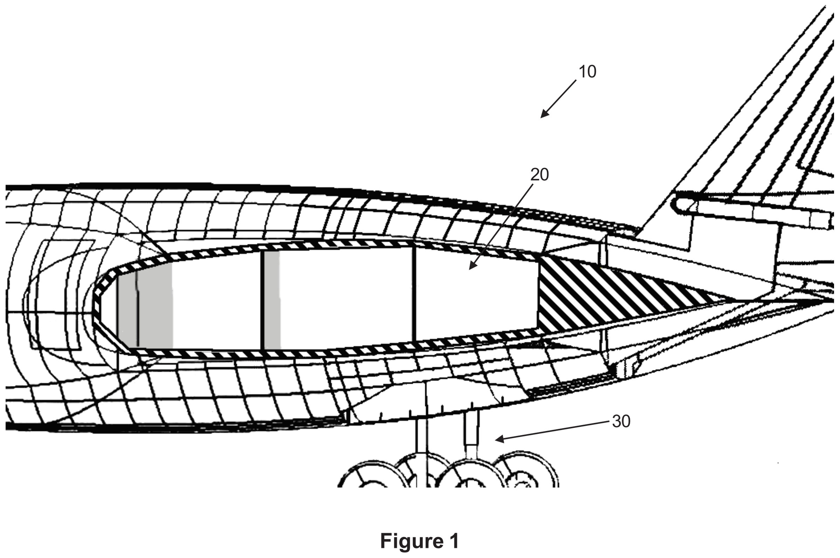

Figure 1 shows an example of a blended wing body (BWB) aircraft 10, facing towards the left of the figure. However, it should be noted that the teachings of the present disclosure are not limited to BWB aircraft, and those skilled in the art will appreciate that they may alternatively be applied to other aircraft types.

The illustrated BWB aircraft 10 comprises a blended wing/body structure 20 and a landing gear assembly 30 extending beneath the wing/body structure 20. The blended wing/body structure 20 acts as both a wing structure, to provide lift, and a body structure in which passengers (or cargo) can be carried. In the illustrated example the landing gear assembly 30 is a main landing gear assembly, although the teachings of the present disclosure are not limited to main landing gear assemblies, and may alternatively be applied to nose gear assemblies, for example. The landing gear assembly 30 is aftwardly retractable into, and forwardly deployable from, a corresponding landing gear bay, within the wing/body structure 20.

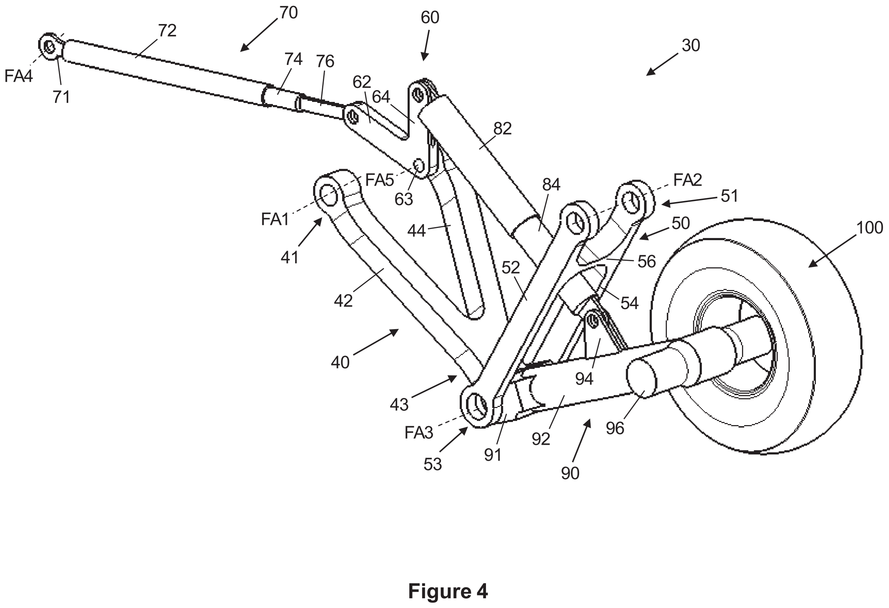

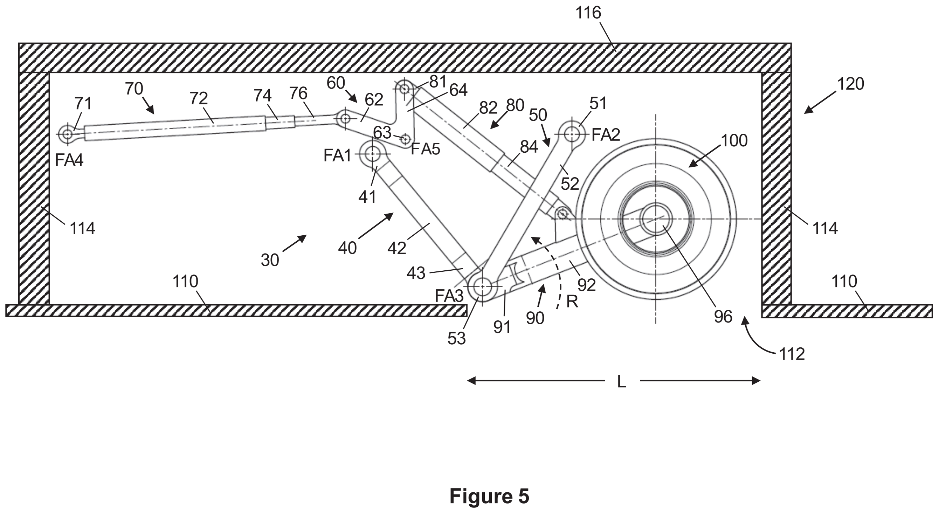

In use, the landing gear assembly 30 is brought (by the operation of one or more actuators) into a deployed configuration, as shown in Figures 1, 2 and 3, for when the aircraft is performing taxiing, take-off and landing operations, or is parked. From the deployed configuration, the landing gear assembly 30 may be brought (again by the operation of one or more actuators) into a retracted or folded configuration, as shown in Figures 4 and 5, during flight.

### Overview of landing gear assembly 30

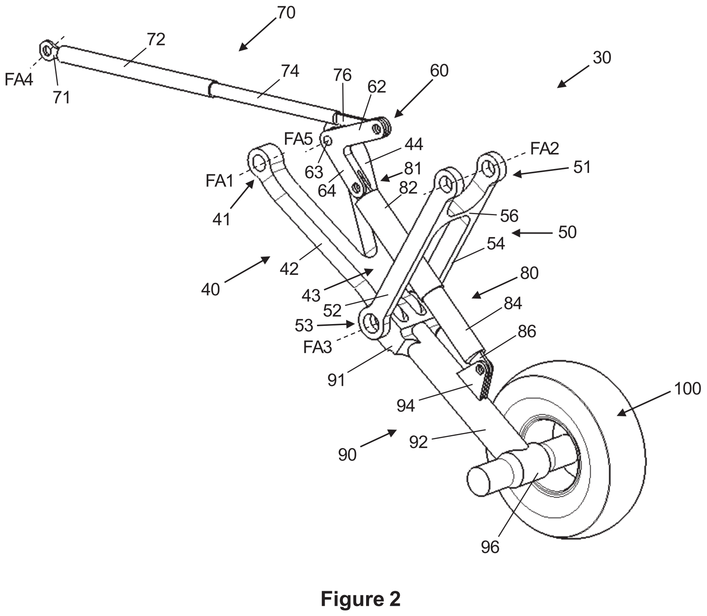

Turning now to Figures 2 to 5, this shows in detail an example landing gear assembly 30 in accordance with the present disclosure. One or more wheels 100 of the aircraft are mounted on the landing gear assembly 30, on respective axle(s). In the illustrated example a single wheel 100 is shown (primarily to facilitate understanding of the present disclosure), although in other examples two or more wheels may be provided. For example, four or six wheels, or more, may be provided on a multiple-axle bogie mounted at the bottom of the landing gear assembly 30.

The landing gear assembly 30 comprises a forward brace 40, an aft brace 50, an actuator piston 70, a bellcrank linkage 60, a primary strut 92 on which the wheel(s) 100 is mounted, and a secondary strut 80.

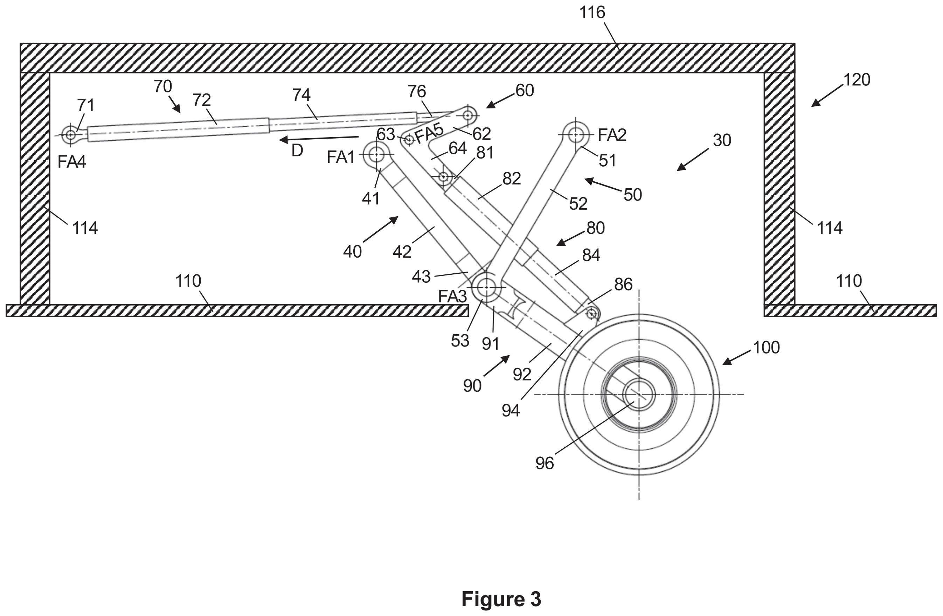

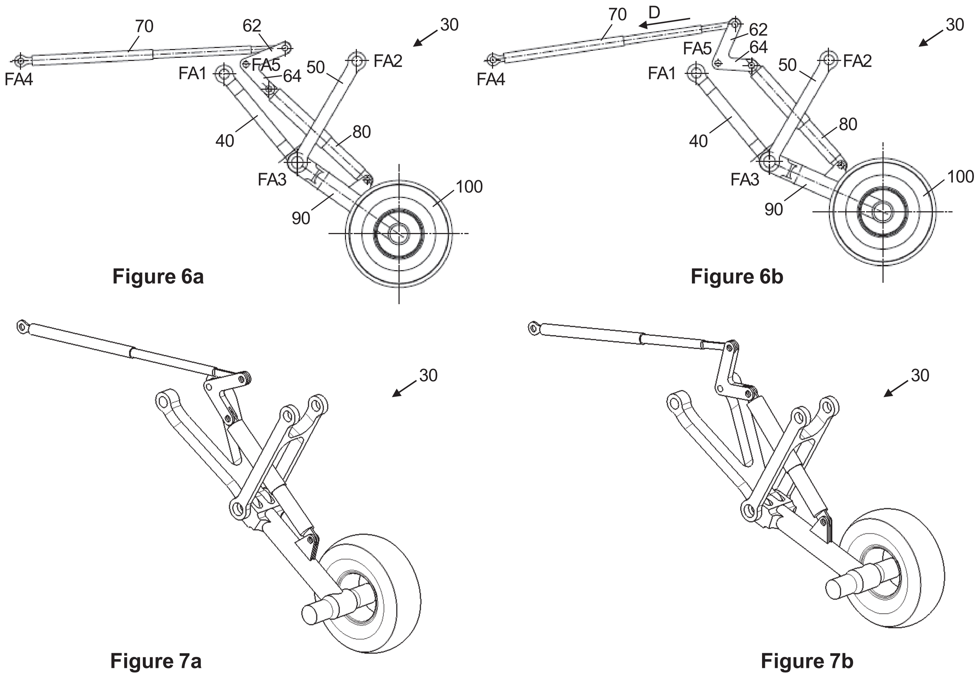

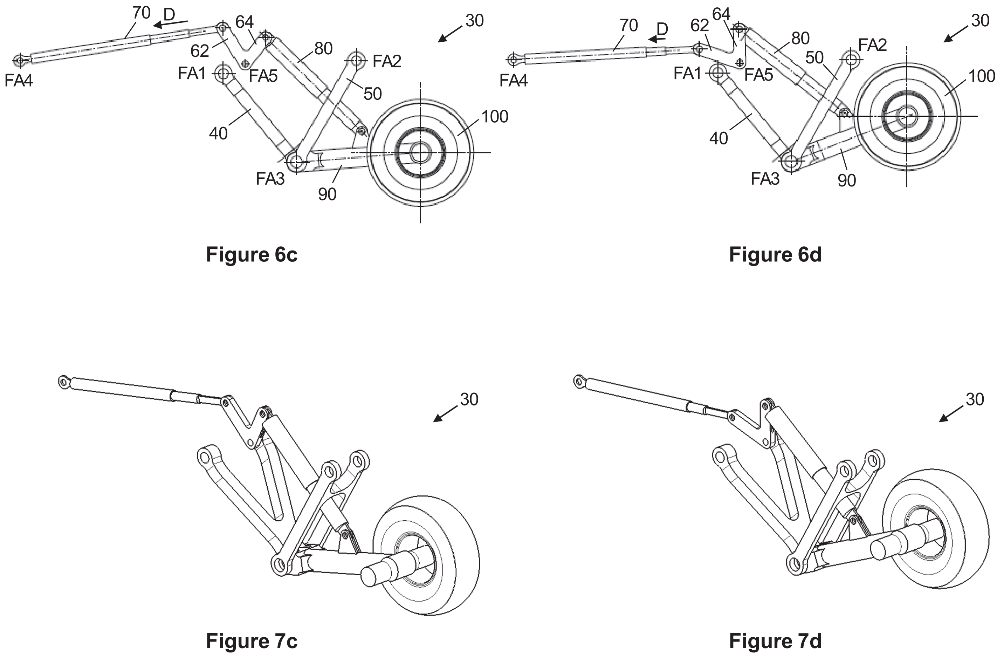

The actuator piston 70 is typically a hydraulic or electrohydraulic piston, and is drivable between an extended configuration (as shown in Figures 2 and 3) and a retracted configuration (as shown in Figures 4 and 5). The landing gear assembly 30 adopts a deployed configuration when the actuator piston 70 is in the extended configuration, as shown in Figures 2 and 3. Conversely, the landing gear assembly 30 adopts a retracted configuration when the actuator piston 70 is in the retracted configuration, as shown in Figures 4 and 5. As shown in Figures 6a-6d and 7a-7d, the landing gear assembly 30 transitions from the deployed configuration to the retracted configuration as the actuator piston 70 is progressively retracted (as indicated by arrow D in Figures 3 and 6b-6d). In a reverse manner, the landing gear assembly 30 may be transitioned from the retracted configuration to the deployed configuration by progressively extending the actuator piston 70.

It will be appreciated that the couplings (e.g. pins and/or linkage bolts) that couple the various struts and linkages together (in many cases in a pivotal manner), and that attach the landing gear assembly 30 to the airframe of the aircraft, have been omitted from the drawings in order to enable the configuration and interoperation of the various struts and linkages to be more clearly understood. Those skilled in the art will readily understand how the struts and linkages may be coupled together, and this need not be described further herein. It will also be appreciated that other components (such as brake components) that may be associated with the landing gear assembly 30 have also been omitted from the drawings, again for the sake of clarity and ease of understanding, and will also not be described further herein.

### Forward brace 40

The forward brace 40 has a first end 41 for fixedly attaching to (i.e. interfacing with) the airframe of the aircraft at a fixed point FA1, which defines the first of four interface points of the present landing gear assembly 30. The forward brace 40 also has a second end 43 to which the aft brace 50 is fixedly coupled.

In the illustrated example, the forward brace 40 comprises a first forward bracing strut 42 and a second forward bracing strut 44, each having a first end and a second end. The first end of the first forward bracing strut 42 and the first end of the second forward bracing strut 44 form the first end 41 of the forward brace 40. The second end of the first forward bracing strut 42 and the second end of the second forward bracing strut 44 join to form the second end 43 of the forward brace 40, to which the aft brace 50 is fixedly coupled.

The first and second forward bracing struts 42, 44 are spaced apart from one another at the first end 41, to enhance the strength and rigidity of the landing gear assembly 30. Further, the first and second forward bracing struts 42, 44 each incorporate an angled central portion that causes them to come closer together as they extend from the first end 41 to the second end 43.

### Aft brace 50

The aft brace has a first end 51 for fixedly attaching to (i.e. interfacing with) the airframe of the aircraft at a fixed point FA2, which defines the second of the four interface points of the landing gear assembly 30. The aft brace 50 also has a second end 53 to which the second end 43 of the forward brace 40 is fixedly coupled. Such fixed coupling may be direct coupling, as illustrated, with the second end 53 of the aft brace 50 coupling directly to the second end 43 of the forward brace 40 (at FA3). Alternatively, however, the coupling between the second end 53 of the aft brace 50 and the second end 43 of the forward brace 40 may be indirect. For example, one or more fixed connecting members may be provided between the second end 53 of the aft brace 50 and the second end 43 of the forward brace 40.

In the illustrated example, the aft brace 50 comprises a first aft bracing strut 52 and a second aft bracing strut 54, each having a first end and a second end. The first end of the first aft bracing strut 52 and the first end of the second aft bracing strut 54 form the first end 51 of the aft brace 50. The second end of the first aft bracing strut 52 and the second end of the second aft bracing strut 54 form the second end 53 of the aft brace 50, to which the second end 43 of the forward brace 40 is fixedly coupled.

The aft brace 50 further comprises a cross member 56 connecting the first aft bracing strut 52 to the second aft bracing strut 54. In the illustrated example, the cross member 56 is much closer to the first end 51 of the aft brace 50 than to the second end 53 of the aft brace 50. The secondary strut 80 passes between the cross member 56 and the second end 53 of the aft brace 50.

Together, the forward brace 40 and the aft brace 50 form a robust V-shaped structure, which helps to protect the interior of the aircraft (e.g. the passenger cabin) in the event of a crash landing.

### Actuator piston 70

The actuator piston 70 comprises a first end 71, a piston cylinder 72, and a piston rod 74 terminating in a second end 76. The piston rod 74 is controllably extendable from, and retractable into, the piston cylinder 72. The first end 71 incorporates a pivotable anchor and is fixed to the cylinder 72. The second end 76, at the end of the piston rod 74, also incorporates a pivotable anchor.

The first end 71 of the actuator piston 70 is pivotally attached to the airframe of the aircraft about a fixed pivot axis FA4, which defines the third of the four interface points of the landing gear assembly 30.

### Bellcrank linkage 60

The bellcrank linkage 60 comprises a first end 62, a second end 64, and a pivot point 63 between the first end 62 and the second end 64. Accordingly, a first portion of the bellcrank linkage 60 extends from the first end 62 to the pivot point 63, and a second portion of the bellcrank linkage 60 extends from the pivot point 63 to the second end 64.

The second portion of the bellcrank linkage 60 is at an acute angle relative to the first portion of the bellcrank linkage 60. In other words, virtual lines plotted from the pivot point 63 to the first end 62, and from the pivot point 63 to the second end 64, would be at an acute angle to one another. In the illustrated example, the acute angle between the first portion and the second portion of the bellcrank linkage 60 is approximately 70°.

The pivot point 63 of the bellcrank linkage 60 is pivotally attached to the airframe of the aircraft about a fixed pivot axis FA5, which defines the fourth of the four interface points of the landing gear assembly 30.

It may be noted that, when the landing gear assembly 30 is viewed from the side, as in Figures 3 and 5, the acute angle of the bellcrank linkage 60 is on the outside of the landing gear assembly 30. Expressed differently, if the shape of the bellcrank linkage 60 is considered similar to an arrowhead, the arrowhead points in the general direction of the fixed point FA1, the forward brace 40 and the aft brace 50.

The first end 62 of the bellcrank linkage 60 is pivotally coupled to the second end 76 of the actuator piston 70. Accordingly, extension or retraction of the actuator piston 70 causes the bellcrank linkage 60 to rotate about its pivot point 63.

The second end 64 of the bellcrank linkage 60 is pivotally coupled to a first end 81 of the secondary strut 80, as discussed in greater detail below. In the illustrated example, the coupling between the second end 64 of the bellcrank linkage 60 and the first end 81 of the secondary strut 80 is achieved by the second end 64 of the bellcrank linkage 60 being in the form of a clevis, having bifurcated parallel parts between which the first end 81 of the secondary strut 80 is pivotally coupled.

In the illustrated example, the first and second portions of the bellcrank linkage 60 are of unequal length. More particularly, the first portion of the bellcrank linkage 60 (from the pivot point 63 to the coupling point at the first end 62) is longer than the second portion of the bellcrank linkage 60 (from the pivot point 63 to the coupling point at the second end 64). Specifically, in the illustrated example, the first portion is approximately 1.3 times the length of the second portion. In other examples, however, the first and second portions of the bellcrank linkage 60 may be of equal (or substantially equal) length.

### Primary strut 90

The primary strut 90 comprises a main central shaft portion 92 (of relatively large diameter) having a first end 91 and a second end 96. One or more wheels 100 of the aircraft are mounted at the second end 96 of the primary strut 90, on an axle or by means of a bogie. The first end 91 of the primary strut 90 is pivotally coupled to the second end 43 of the forward brace 40 and the second end 53 of the aft brace 50. Such pivotal coupling may be direct coupling, as illustrated, with the first end 91 of the primary strut 90 being pivotally mounted about a common fixed axis, FA3, with the second end 43 of the forward brace 40 and the second end 53 of the aft brace 50. Alternatively, however, the pivotal coupling may be indirect. For example, one or more fixed connecting members may be provided between the second end 43 of the forward brace 40 or the second end 53 of the aft brace 50, and the pivotal first end 91 of the primary strut 90.

### Secondary strut 80

The secondary strut 80 comprises a first end 81 and a second end 86. The first end 81 of the secondary strut 80 is pivotally coupled to the second end 64 of the bellcrank linkage 60. The second end 86 of the secondary strut 80 is pivotally coupled to a pivot point 94 near to the second end 96 of the primary strut 90.

Preferably the secondary strut 80 is a shock absorber or so-called "oleo" strut, to cushion the impact of the aircraft landing. The shock absorber 80 comprises a cylinder 82, and a strut piston 84 which is axially moveable (inwards and outwards) within the cylinder 82. The first end 81 of the secondary strut 80 comprises a pivotable anchor point attached to the end of the cylinder 82, that is pivotally coupled to the second end 64 of the bellcrank linkage 60. Another pivotable anchor point is provided at the end 86 of the strut piston 84, that is pivotally coupled to the pivot point 94 on the primary strut 90.

The shock absorber 80 may be a modular shock absorber or oleo strut, that can be readily replaced in the event of a fault developing. This may be done by jacking the aircraft at the axis FA3, for example, to take the weight of the aircraft off the wheel 100 and enable the shock absorber 80 to be removed and replaced.

As illustrated in Figures 4 to 7d, when retracting the landing gear assembly 30 upon retraction of the actuator piston 70, the bellcrank linkage 60 is rotated about its pivot point 63 and the second end 64 of the bellcrank linkage 60 pulls the primary strut 90 and the wheel 100 upwards and aftwards, with the pulling force being applied through the secondary strut or shock absorber 80. Conversely, when lowering the landing gear assembly 30 into its deployed configuration upon extension of the actuator piston 70, the bellcrank linkage 60 is rotated (in the opposite sense) about its pivot point 63 and the second end 64 of the bellcrank linkage 60 lowers the primary strut 90 and the wheel 100, again by means of the secondary strut or shock absorber 80.

The shock absorber 80 may be configured to "fail long", i.e. to remain extended in the event it loses oil or pressure. This enables the shock absorber 80 to continue to act as the component via which the primary strut 90 and wheel 100 are raised or lowered, despite the shock absorber 80 having become faulty. Accordingly the landing gear assembly 30 remains retractable or deployable, to enable safe (albeit not fully cushioned) takeoff and landing operations to still be carried out.

Optionally the second end 86 of the secondary strut 80 may be pivotally coupled to the pivot point 94 on the primary strut 90 by means of a fuse pin that is configured to fail in a controlled manner in the event of an extraordinarily hard landing or crash landing.

Alternatively, or in addition, the pivotable joint at FA3, by means of which the primary strut 90 is pivotally coupled to the second ends 43, 53 of the forward brace 40 and the aft brace 50, may also incorporate a fuse pin, again configured to fail in a controlled manner in the event of an extraordinarily hard landing or crash landing.

### Landing gear bay 120

The landing gear assembly 30 is extendable from, and retractable into, a corresponding gear bay of the aircraft. Figures 3 and 5 schematically indicate regions 110 of the wing or body structure, between which the opening 112 of the gear bay 120 is defined. It will be appreciated that this opening 112 may typically be closed by gear bay doors (not shown) when the landing gear assembly 30 is retracted therein, during flight. Figures 3 and 5 also schematically indicate the internal walls 114, 116 of the gear bay 120, which separate the gear bay 120 from the passenger-, cargo- or fuel-carrying regions of the aircraft, for example. It will be appreciated from Figures 3 and 5 that the overall size and configuration of the gear bay 120 is compact, and therefore well suited to incorporation in the wing/body structure of a BWB aircraft, for example - for example to house the main landing gear in the tapered aft section of such an aircraft.

As shown by the arrow R in Figure 5, the primary strut 90 pivots about the fixed axis FA3 when the landing gear assembly 30 transitions from the deployed configuration of Figure 3 to the retracted configuration of Figure 5. Since the length L of the gear bay opening 112 between the regions 110 of the wing or body structure of the aircraft is determined by the length of the primary strut 90 and the radius of the wheel 100, and not by the lengths of any of the other struts that make up the landing gear assembly 30, length L can be made optimally short through making the primary strut 90 no longer than necessary.

### Operational kinematics

Figures 6a to 6d (and likewise Figures 7a to 7d) sequentially show the manner of operation of the landing gear assembly 30 when transitioning from its deployed configuration (as in Figure 6a) to its retracted configuration (as in Figure 6d). To begin with, it may be noted from Figure 6a that, when the landing gear assembly 30 is in its deployed configuration, the actuator piston 70 is fully extended and in an orientation on the page that is slightly above the horizontal. It will of course be appreciated that, during operation, the actual orientation of the actuator piston 70 and the other movable components will depend on the pitch of the aircraft at any particular time, but for the purpose of the present explanation it is instructive to consider the orientation of the actuator piston 70 and the other movable components as shown on the page, and to observe their angular changes relative to the initial configuration shown in Figure 6a. Also in Figure 6a, it may be noted that the bellcrank linkage 60 is oriented such that its first end 62 is slightly raised from the horizontal and its second end 64 is angled steeply downward, and the primary strut 90 is at an angle of approximately 45° from the horizontal.

As shown in Figure 6b, upon a small initial amount of retraction of the actuator piston 70 in direction D, the bellcrank linkage 60 is rotated about its pivot point 63 and the fixed axis FA5. More particularly, the first end 62 of the bellcrank linkage 60 is pulled upwards by the actuator piston 70, to an angle approaching the vertical, and the second end 64 of the bellcrank linkage 60 is brought upwards, towards the horizontal. This has the effect of pulling the shock absorber 80 upwards, and also beginning to raise the primary strut 90 about the axis FA3. It may also be noted that the first end of the actuator piston 70 has rotated upwards, about the fixed axis FA4.

With reference now to Figure 6c, upon further retraction of the actuator piston 70 in direction D, the bellcrank linkage 60 is further rotated about its pivot point 63 and the fixed axis FA5. More particularly, the first end 62 of the bellcrank linkage 60 is pulled further by the actuator piston 70, now beyond the vertical, and the second end 64 of the bellcrank linkage 60 is brought further upwards, such that it is now above the horizontal. This has the effect of pulling the shock absorber 80 further inwards, and raising the primary strut 90 further about the axis FA3, now to an angle above the horizontal. It may also be noted that the first end of the actuator piston 70 has now begun to rotate downwards about the fixed axis FA4.

Notably, when transitioning from the configuration shown in Figure 6b to that of Figure 6c, the first end 62 of the bellcrank linkage 60 rotates about the pivot point 63 of the bellcrank linkage 60 in an over-centred manner. This is accompanied by the first end of the actuator piston 70 changing from rotating upwards about the fixed axis FA4, to rotating downwards. Such over-centring may advantageously help to hold the landing gear assembly 30 in either the retracted configuration or the deployed configuration (whichever configuration it is currently in) the event of failure of the actuator piston 70.

Finally, upon reaching the configuration shown in Figure 6d (corresponding to full retraction of the landing gear assembly 30 into the gear bay), the actuator piston 70 has maximally retracted in direction D, and the bellcrank linkage 60 has further rotated about its pivot point 63 and the fixed axis FA5. The first end 62 of the bellcrank linkage 60 is now at an angle further beyond the vertical, and the second end 64 of the bellcrank linkage 60 has been brought further upwards, such that it is now oriented vertically upwards. The shock absorber 80 has been pulled maximally upwards (and inwards), and the primary strut 90 has been raised further about the axis FA3, into a fully retracted state. It may also be noted that the first end of the actuator piston 70 has now rotated further downwards about the fixed axis FA4, such that it is now closer to the horizontal again.

Notably, when the landing gear assembly 30 transitions from the deployed configuration (as in Figures 2, 3 and 6a) to the retracted configuration (as in Figures 4, 5 and 6d), the point at which the secondary strut or shock absorber 80 passes between the cross member 56 and the second end 53 of the aft brace 50 (between the first aft bracing strut 52 and the second aft bracing strut 54) moves progressively upwards, from close to the second end 53 of the aft brace 50 in Figures 2, 3 and 6a, to close to the cross member 56 in Figures 4, 5 and 6d. Within the aft brace 50, the internal aperture formed by the first aft bracing strut 52, the second aft bracing strut 54 and the cross member 56, through which aperture the secondary strut or shock absorber 80 passes, may incorporate guide components to support and guide the upward (or downward) movement of the secondary strut or shock absorber 80 as the landing gear assembly 30 transitions between the deployed and retracted configurations.

A guide mechanism (such as guide rollers) may also be provided within the gear bay, to guide the landing gear assembly 30 into the retracted configuration of Figure 6d during retraction.

It will be appreciated that transitioning of the landing gear assembly 30 from the retracted configuration to the deployed configuration is achieved by reversing the sequence described above, i.e. by transitioning from the configuration of Figure 6d to that of Figure 6a (and likewise from Figure 7d to 7a) whilst progressively extending the actuator piston 70.

### Summary

As illustrated, the present disclosure provides a landing gear assembly 30 in which the top end 81 of the shock absorber 80 is attached to the second end 64 of the large bellcrank type linkage 60 that has a fixed pivot 63 connected to the airframe, at FA5. The first end 62 of the bellcrank linkage 60 is connected to the retraction actuator 70. As the actuator 70 reduces in length (using hydraulic or electrical power) the landing gear (primary strut 90 and wheel(s) 100) is pulled upwards about axis FA3 and aft into the landing gear bay 120. Beneficially the stowed length of the landing gear is shortened.

The kinematic geometry of this solution is such that the landing gear reduces in length as it retracts aftwards into the gear bay area. This results in a shorter gear bay length requirement with considerable benefit to the aircraft. This is particularly relevant (but not limited) to BWB aircraft due to the tapering of the fuselage at the aft section of these aircraft types.

Moreover, the landing gear assembly 30 of the present disclosure has no need for lock links to brace the shock absorber 80 when the landing gear assembly 30 is in its deployed configuration, or for associated actuators for releasing such lock links when starting to retract the landing gear assembly 30.

### Modifications and alternatives

Detailed embodiments and some possible alternatives have been described above. As those skilled in the art will appreciate, a number of modifications and further alternatives can be made to the above embodiments whilst still benefiting from the inventions embodied therein.

## Claims

1. A landing gear assembly for an aircraft, the landing gear assembly comprising:
a forward brace having a first end for attachment to an airframe of the aircraft, and a second end;
an aft brace having a first end for attachment to the airframe of the aircraft, and a second end, wherein the second end of the aft brace is coupled to the second end of the forward brace;
an actuator piston having a first end and a second end, wherein the first end of the actuator piston is pivotally attachable to the airframe of the aircraft;
a bellcrank linkage having a first end, a second end, and a pivot point between the first end and the second end, such that a first portion of the bellcrank linkage extends from the first end to the pivot point, and a second portion of the bellcrank linkage extends from the pivot point to the second end, wherein the pivot point of the bellcrank linkage is pivotally attachable to the airframe of the aircraft, and wherein the first end of the bellcrank linkage is pivotally coupled to the second end of the actuator piston;
a primary strut having a first end and a second end, wherein the first end of the primary strut is pivotally coupled to the second end of the forward brace and the second end of the aft brace, and wherein one or more wheels of the aircraft are mounted at the second end of the primary strut; and
a secondary strut having a first end and a second end, wherein the first end of the secondary strut is pivotally coupled to the second end of the bellcrank linkage, and wherein the second end of the secondary strut is pivotally coupled to a pivot point near to the second end of the primary strut;
wherein the landing gear assembly is configured to adopt a deployed configuration when the actuator piston is in an extended configuration, and wherein the landing gear assembly is configured to adopt a retracted configuration when the actuator piston is in a retracted configuration.

2. The landing gear assembly according to claim 1, wherein the first end of the primary strut is pivotally mounted about a common axis with the second end of the forward brace and the second end of the aft brace.

3. The landing gear assembly according to claim 1 or claim 2, wherein the pivot point of the bellcrank linkage is between the first end of the forward brace and the first end of the aft brace.

4. The landing gear assembly according to any preceding claim, wherein the second portion of the bellcrank linkage is at an acute angle relative to the first portion of the bellcrank linkage;
optionally wherein the acute angle is approximately 70°.

5. The landing gear assembly according to any preceding claim, wherein the first portion of the bellcrank linkage is longer than the second portion of the bellcrank linkage;
optionally wherein the first portion of the bellcrank linkage is approximately 1.3 times the length of the second portion of the bellcrank linkage.

6. The landing gear assembly according to any preceding claim, wherein the forward brace comprises a first forward bracing strut and a second forward bracing strut, each having a first end and a second end, wherein the first end of the first forward bracing strut and the first end of the second forward bracing strut form the first end of the forward brace, and wherein the second end of the first forward bracing strut and the second end of the second forward bracing strut join to form the second end of the forward brace.

7. The landing gear assembly according to any preceding claim, wherein the aft brace comprises a first aft bracing strut and a second aft bracing strut, each having a first end and a second end, wherein the first end of the first aft bracing strut and the first end of the second aft bracing strut form the first end of the aft brace, and wherein the second end of the first aft bracing strut and the second end of the second aft bracing strut form the second end of the aft brace.

8. The landing gear assembly according to claim 7, wherein the aft brace further comprises a cross member connecting the first aft bracing strut to the second aft bracing strut.

9. The landing gear assembly according to claim 8, wherein the cross member is closer to the first end of the aft brace than to the second end of the aft brace.

10. The landing assembly according to claim 8 or claim 9, wherein the secondary strut passes between the cross member and the second end of the aft brace.

11. The landing gear assembly according to any preceding claim, wherein the secondary strut comprises a shock absorber;
optionally wherein the shock absorber is configured to adopt an extended configuration in the event it loses oil or pressure.

12. The landing gear assembly according to any preceding claim, wherein the second end of the secondary strut is pivotally coupled to the pivot point near to the second end of the primary strut by means of a fuse pin.

13. The landing gear assembly according to any preceding claim, wherein, when transitioning from the deployed configuration to the retracted configuration, the first end of the bellcrank linkage is configured to rotate about the pivot point of the bellcrank linkage in an over-centred manner.

14. The landing gear assembly according to any preceding claim, being a main landing gear assembly.

15. An aircraft comprising:
the landing gear assembly according to any preceding claim; and
a landing gear bay;
wherein the landing gear assembly is retractable into the landing gear bay when transitioning from the deployed configuration to the retracted configuration;
optionally wherein the aircraft is a blended wing body aircraft.
